# EUROPÄISCHE PATENTANMELDUNG

(11) **EP 1 470 937 A1**
(43) Veröffentlichungstag der Anmeldung: **27.10.2004**
(21) Anmeldenummer: 03009270.4
(22) Anmeldetag: 24.04.2003
(51) Int. Cl.: B60C 1/00, C08L 7/00

(54) **Kautschukmischung und Fahrzeugluftreifen mit einer solchen Mischung**

(71) Anmelder: Continental Aktiengesellschaft, 30165 Hannover (DE)
(72) Erfinder: Weber, Christian, Dr., 30823 Garbsen (DE); Erdogan, Latif, 30926 Seelze (DE); du Bois, Andre, Dr., 30657 Hannover (DE)

(57) **Zusammenfassung**

Die Erfindung betrifft eine schwefelvernetzbare Kautschukmischung, insbesondere für Festigkeitsträgergummierungen und/oder Gürtelkantenstreifen von Fahrzeugluftreifen. Die Erfindung betrifft ferner einen Fahrzeugluftreifen, der eine solche mit Schwefel vulkanisierte Kautschukmischung aufweist.

Die Kautschukmischung enthält
- 50 bis 95 phr (Gewichtsteile, bezogen auf 100 Gewichtsteile der gesamten Kautschuke in der Mischung) Naturkautschuk,
- 5 bis 50 phr einer Mikrodispersion von syndiotaktischem 1,2-Polybutadien in cis-1,4-Polybutadien, wobei die Mikrodispersion 5 bis 40 Gew.-% des syndiotaktischem 1,2-Polybutadiens aufweist,
- 0 bis 35 phr zumindest eines weiteren Dienkautschukes außer Naturkautschuk und
- 45 bis 100 phr Kieselsäure und/oder Ruß.

## Beschreibung

Die Erfindung betrifft eine schwefelvemetzbare Kautschukmischung, insbesondere für Festigkeitsträgergummierungen und/oder Gürtelkantenstreifen von Fahrzeugluftreifen. Die Erfindung betrifft ferner einen Fahrzeugluftreifen, der eine solche mit Schwefel vulkanisierte Kautschukmischung aufweist.

Viele Gummiprodukte weisen Bereiche auf, die besonders starken mechanischen und thermischen Beanspruchungen ausgesetzt sind. Derartige Bereiche sind beim Fahrzeugluftreifen z. B. der Gürtel, der in der Regel vermessingte Stahlcorde als Festigkeitsträger enthält, und dessen Umgebung, insbesondere die Gürtelkante, sowie der Wulstbereich. Kautschukmischungen, die in diesen Bereichen eingesetzt werden, wie die Kautschukmischung für die Gürtelgummierung oder die Gürtelkantenstreifen oder die Gummierung von Wulstverstärkerlagen oder der Apex, sollten daher als Vulkanisate einen geringen Wärmeaufbau und eine hohe dynamische und mechanische Beständigkeit bei möglichst hohem dynamischen Modul aufweisen. Gürtelkantenstreifen und -profile dienen dazu, die mechanische und thermische Belastung im Gürtelkantenbereich während des Reifeneinsatzes zu reduzieren.

Steht die beanspruchte Kautschukmischung zusätzlich mit Festigkeitsträgem, z. B. den Stahlcorden eines Reifengürtels oder einem Stahlcordwulstverstärker, in Kontakt, so sollte die Mischung auch eine gute Anbindung zum Festigkeitsträger aufzeigen, um die Haltbarkeit des Gummi-Festigkeitsträger-Verbundes zu gewährleisten. Zur Verbesserung der Gummi-Metall-Haftung ist es seit langem bekannt, Cobaltsalze oder ein Resorcin-Formaldehyd-Kieselsäuresystem als Zusätze für die Kautschukmischungen der Gürtelgummierung zu verwenden.

Aus der EP-A-1 260 384 ist es bekannt, dass für eine gute Gürtelhaltbarkeit bei einem Fahrzeugluftreifen die Gürtelgummierung (auch Haftmischung genannt) aus einer vulkanisierten Kautschukmischung bestehen sollte, die eine gute Anbindung zum Stahlcord, eine ausgewogene Steifigkeit, gute Dehneigenschaften, eine gute Alterungsbeständigkeit und einen geringen Wärmeaufbau bei dynamischer Belastung aufweist. Ferner ist ein höherer dynamischer Elastizitätsmodul von Vorteil. Auf Grund des geringen Wärmeaufbaus werden für derartige Kautschukmischungen Naturkautschuk und/oder synthetisches Polyisopren verwendet. Die Mischungen enthalten als Füllstoffe Ruß und/oder Kieselsäure. Zur Verbesserung der Haftung an den Stahlcord enthält die Mischung außerdem ein Cobaltsalz, ein Resorcinharz und einen Methylenspender.

In der EP-B-0 359 694 sind Kautschukmischungen für Gürtelgummierungen, Laufflächenunterschichten und Gürtelkantenstreifen beschrieben, die die Hochgeschwindigkeitstauglichkeit von Reifen verbessern sollen. Es soll durch diese Mischungen ebenfalls möglich sein, auf eine Gürtelbandage zu verzichten. Die in der EP-B-0 359 694 vorgeschlagenen Kautschukmischungen enthalten 25 bis 75 Gew.-% einer stark dispergierten Mischung von syndiotaktischem 1,2-Polybutadien in synthetischem Polyisopren, 25 bis 75 Gew.-% Naturkautschuk, 0 bis 40 Gew.-% eines weiteren Dienkautschukes außer Naturkautschuk, Füllstoffe und weitere übliche Mischungsbestandteile, wie z. B. Schwefel, Beschleuniger, Alterungsschutzmittel usw..

Der vorliegenden Erfindung liegt die Aufgabe zugrunde, Kautschukmischungen für mechanisch und thermisch stark beanspruchte Bereiche von Gummiprodukten, insbesondere für den Gürtelbereich und den Wulstbereich von Fahrzeugluftreifen, bereitzustellen, die bei den Gummiprodukten eine gute Haltbarkeit bewirken. Insbesondere sollen Kautschukmischungen für die Gummierung und/oder die Gürtelkantenstreifen von Fahrzeugluftreifen bereitgestellt werden, die eine gute Gürtel- und/oder Wulsthaltbarkeit gewährleisten.

Gelöst wird diese Aufgabe erfindungsgemäß dadurch, dass die Kautschukmischung
- 50 bis 95 phr Naturkautschuk,
- 5 bis 50 phr einer Mikrodispersion von syndiotaktischem 1,2-Polybutadien in cis-1,4-Polybutadien, wobei die Mikrodispersion 5 bis 40 Gew.-% des syndiotaktischem 1,2-Polybutadiens aufweist,
- 0 bis 35 phr zumindest eines weiteren Dienkautschukes außer Naturkautschuk und
- 45 bis 100 phr Kieselsäure und/oder Ruß enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. In der Kautschukmischung addieren sich die phr-Anteile der verschiedenen Kautschuke zu 100.

Im Vergleich zu Vulkanisaten aus herkömmlichen Gürtelgummierungsmischungen auf der Basis von Naturkautschuk und/oder synthetischem cis-1,4-Polyisopren zeichnen sich die Vulkanisate der erfindungsgemäßen Mischungen durch eine verbesserte Rissbeständigkeit, eine erhöhte dynamische Beständigkeit und eine verbesserte Alterungsbeständigkeit aus. Der dynamische Elastizitätsmodul wird ebenfalls erhöht, ohne dass andere Eigenschaften, wie z. B. der Wärmeaufbau (Heat build-up) und die Haftung an Stahlcord, sich verschlechtern. Der Elastizitätsmodul ließe sich zwar auch durch die Erhöhung des Anteiles an aktivem Füllstoff erhöhen, aber dies ginge mit einem nachteiligen Anstieg der Hysterese und einer ausgeprägten Erhöhung der Viskosität einher.

Die Verbesserung der vorgenannten Eigenschaften führt insgesamt dazu, dass es bei Einsatz einer derartigen Mischung als Gürtelgummierung und/oder Gürtelkantenstreifen unter dynamischer Belastung der Gürtelkante, d. h. während des Reifenlaufes, zu einem geringeren Risswachstum und zu einer erhöhten Gürtelhaltbarkeit kommt. Bei Reifen, die runderneuert werden können, erhöht sich dadurch die Rundemeuerungsfähigkeit.

Die erfindungsgemäßen Kautschukmischungen können neben der Verwendung als Gürtelgummierung oder Gürtelkantenstreifen auch für andere Bauteile oder Gummiprodukte, die hohen thermischen und mechanischen Belastungen ausgesetzt sind, eingesetzt werden. So kann die Mischung beispielsweise auch im Wulstbereich eines Fahrzeugluftreifens, z. B. als Wulstverstärkergummierung, eingesetzt werden, wo ebenfalls Vulkanisate mit hohem Elastizitätsmodul bei geringem Wärmeaufbau sowie gute Rissbeständigkeit gefordert werden. Die Mischung kann auch als Karkassgummierung z. B. für Stahlkarkassen von LKW-Reifen verwendet werden.

In der Kautschukmischung ist eine Mikrodispersion von syndiotaktischem 1,2-Polybutadien in cis-1,4-Polybutadien enthalten, wobei die Mikrodispersion 5 bis 40 Gew.-% des syndiotaktischem 1,2-Polybutadiens aufweist. Da ein Polybutadien in einem Polybutadien dispergiert ist, treten aufgrund der sehr ähnlichen Molekülstruktur kaum Unverträglichkeiten auf, und man kann so eine sehr gute Verteilung (Dispersion) des 1,2-Polybutadiens in dem cis-1,4-Polybutadien und damit letztendlich in der gesamten Mischung erzielen, was eine Verbesserung der Ermüdungsrissbeständigkeit und der Weiterreißfestigkeit der Vulkanisate bewirkt. Mikrodispersionen von syndiotaktischem 1,2-Polybutadien in cis-1,4-Polybutadien sind kommerziell erhältlich.

Die Kautschukmischung enthält 50 bis 95 phr Naturkautschuk, bei weniger als 50 phr kann es zu Einbußen in den Weiterreißfestigkeit kommen. Bevorzugt werden 65 bis 90 phr Naturkautschuk eingesetzt, da man bei diesem Anteil besonders gute Ergebnisse hinsichtlich der Weiterreißfestigkeit und des dynamischen Moduls erhält.

Die Kautschukmischung enthält 5 bis 50 phr, bevorzugt 10 bis 35 phr, der Mikrodispersion von syndiotaktischem 1,2-Polybutadien in cis-1,4-Polybutadien. Bei mehr als 50 phr der Mikrodispersion steigen Modul und Härte der Vulkanisate stark an und die Vulkanisate aus den Mischungen werden spröde und damit schlechter in Riss- und Ermüdungsbeständigkeit.

Gemäß einer vorteilhaften Weiterbildung der Erfindung weist die Mikrodispersion 10 bis 20 Gew.-% des syndiotaktischen 1,2-Polybutadiens auf. So können z. B. die Mikrodispersionen VCR 412® (12 Gew.-% syndiotaktisches 1,2-Polybutadien) und VCR 617® (17 Gew.-% syndiotaktisches 1,2-Polybutadien) der Firma Ube Industries LTD, Japan verwendet werden.

Die Kautschukmischung kann bis zu 35 phr zumindest eines weiteren Dienkautschukes außer Naturkautschuk enthalten. Zu den Dienkautschuken zählen alle Kautschuke mit einer ungesättigten Kohlenstoffkette, die sich zumindest teilweise von konjugierten Dienen ableiten. Es können z. B. cis-1,4-Polybutadien, Vinyl-Polybutadien, Styrol-Butadien-Copolymere, synthetisches Polyisopren, Isopren-Butadien-Kautschuk, Nitrilkautschuk oder Verschnitte daraus eingesetzt werden. Besonders bevorzugt ist es allerdings, wenn als weiterer Dienkautschuk allein cis-1,4-Polybutadien eingesetzt wird. Auf diese Weise werden nur drei verschiedene Polydiene (Naturkautschuk, cis-1,4-Polybutadien und syndiotaktisches 1,2-Polybutadien) in der Mischung eingesetzt, was zu einer sehr gleichmäßigen Kautschukmischung führt. Die Vulkanisate weisen einen geringen Wärmeaufbau und eine gute Alterungsbeständigkeit auf.

Die Kautschukmischung enthält 45 bis 100 phr, bevorzugt 50 bis 70 phr, Kieselsäure und/oder Ruß. Bei mehr als 100 phr an Füllstoff steigt die Viskosität der Mischung an und es kann zu Verarbeitungsproblemen kommen. Bei weniger als 45 phr Füllstoffanteil kann sich die Weiterreißfestigkeit der Vulkanisate verschlechtern.

Bei den verwendeten Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN 66131 und 66132) von 35 bis 350 m²/g, vorzugsweise von 145 bis 270 m²/g und eine CTAB-Oberfläche (gemäß ASTM D 3765) von 30 bis 350 m²/g, vorzugsweise von 120 bis 285 m²/g, aufweist. Als Kieselsäuren können somit z. B. jene des Typs Ultrasil VN3 (Handelsname) der Firma Degussa zum Einsatz kommen.

Zur Verbesserung der Verarbeitbarkeit und zur Anbindung der Kieselsäure, an die Dienkautschuke werden Silan-Kupplungsagenzien in Kautschukmischungen eingesetzt.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden.

Die Silan-Kupplungsagenzien werden in Mengen von 0,2 bis 30 Gewichtsteilen, vorzugsweise 1 bis 15 Gewichtsteilen, bezogen auf 100 Gewichtsteile Kieselsäure, eingesetzt, da dann eine optimale Anbindung des Füllstoffes an den oder die Kautschuke erfolgen kann.

Die erfindungsgemäße Kautschukmischung kann als Füllstoff auch Ruß ggf. in Kombination mit Kieselsäure enthalten. Der Zusatz von Ruß bringt verarbeitungstechnische Vorteile. Die verwendeten Ruße sollten insbesondere folgende Charakteristika aufweisen: DBP-Zahl (gemäß ASTM D 2414) 90 bis 200 mL/100 g, CTAB-Zahl (gemäß ASTM D 3765) 80 bis 170 m²/g und Iodadsorptionszahl (gemäß ASTM D 1510) 10 bis 250 g/kg.

Gemäß einer vorteilhaften Weiterbildung der Erfindung enthält die Kautschukmischung 0,2 bis 2 phr eines organischen Cobaltsalzes. Derartige Salze verbessern die Haftung zu Stahlcord. Als Cobaltsalze können z. B. Cobaltstearat, -borat, -borat-alkanoate, - naphthenat, -rhodinat, -octoat, -adipat usw. verwendet werden.

Um bei Anwesenheit von Cobaltsalzen eine gute Stahlcordhaftung zu erzielen, ist es vorteilhaft, die Mischung mit viel Schwefel, bevorzugt 4 bis 6 phr Schwefel, oder einer äquivalenten Menge an Schwefelspender zu vernetzen.

Als weitere Zusatzstoffe kann die Kautschukmischung weitere übliche Zuschlagstoffe in üblichen Gewichtsteilen, wie Vernetzungschemikalien (z. B. Schwefel oder Schwefelspender), Vulkanisationsbeschleuniger , Vulkanisationsverzögerer, Zinkoxid, Verarbeitungshilfsmittel (z. B. Minaralölweichmacher, Phenolharze) und Alterungsschutzmittel, enthalten.

Es hat sich herausgestellt, dass die Menge an Verarbeitungshilfsmitteln (Prozesshilfsmitteln), die für besseres Mischen, Extrudieren und Kalandrieren der Mischung zugesetzt werden, wie z. B. Weichmacheröle und Verarbeitungsharze, im Vergleich zu herkömmlichen Mischungen stark reduziert werden kann und die erfindungsgemäßen Mischungen trotzdem ein gutes Verarbeitungsverhalten bei moderater Viskosität und die Vulkanisate gute dynamisch-mechanische Eigenschaften aufweisen.

Die Kautschukmischung kann auch weitere die Haftung zu Stahlcord verbessernde Substanzen, wie z. B. Resorcin-Formaldehyd-Harze, enthalten. Solche Harze sind z. B. Resorcin-Hexamethoxymethylmelamin-Harze (HMMM) oder Resorcin-Hexamethylentetramin-Harze (HEXA).

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet. Z. B. kann der Stahlcord für den Gürtel eines Fahrzeugluftreifens mit dieser Mischung kalandriert werden (Gürtelgummierung) oder die Mischung wird zu dünnen Streifen extrudiert, die als Gürtelkantenstreifen beim Reifenaufbau an den axialen Kanten des Gürtels (auch zwischen den Gürtellagen) aufgelegt werden.

Ein Reifen, der einen Gürtel mit der erfindungsgemäßen Kautschukmischung als Gürtelgummierung aufweist, und/oder dessen Gürtelkantenstreifen aus der Mischung bestehen, und der nach herkömmlichen Verfahren aufgebaut und vulkanisert wird, zeichnet sich durch eine gute Gürtelhaltbarkeit aus.

Die Erfindung soll nun anhand von Vergleichs- und Ausführungsbeispielen, die in den Tabellen 1 bis 6 zusammengefasst sind, näher erläutert werden.

Bei sämtlichen in den Tabellen enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die erfindungsgemäßen Mischungen sind mit E gekennzeichnet.

In den Tabellen 1 und 2 sind die Mischungszusammensetzungen angegeben. Die Mischungen in der Tabelle 1 unterscheiden sich einzig in den eingesetzten Kautschuken. Ebenso verhält es sich mit den Mischungen der Tabelle 2. In den Tabellen 3 bis 6 sind für die verschiedenen Mischungen die ermittelten Mischungs- und Vulkanisateigenschaften aufgelistet.

Die Mischungsherstellung erfolgte unter üblichen Bedingungen. Die Mooney-Viskositäten der Mischungen angegeben in Mooney-Einheiten (ME) wurden gemäß DIN 53 523 mit einem Scherscheiben-Viskosimeter bei 100 °C ermittelt. Aus sämtlichen Mischungen wurden Prüfkörper durch 30-minütige Vulkanisation unter Druck bei 150 °C hergestellt und mit diesen Prüfkörpern für die Kautschukindustrie typische Materialeigenschaften ohne Alterung und nach fünftägiger Alterung bei 80 °C bestimmt, die in der Tabelle 3 bis 6 aufgelistet sind. Für die Tests an Prüfkörpern wurden folgende Testverfahren angewandt:
- Zugfestigkeit bei Raumtemperatur gemäß DIN 53 504
- Reißdehnung bei Raumtemperatur gemäß DIN 53 504
- Spannungswerte bei 100 und 300 % Dehnung bei Raumtemperatur gemäß DIN 53 504
- Bruchenergiedichte bestimmt im Zugversuch nach DIN 53 504, wobei die Bruchenergiedichte die bis zum Bruch erforderliche Arbeit bezogen auf das Volumen der Probe ist
- Shore-A-Härte bei Raumtemperatur gemäß DIN 53 505
- Rückprallelastizität bei Raumtemperatur gemäß DIN 53 512
- Verlustfaktor tan δ bei 25 °C gemäß DIN 53 513 aus Messung mit variabler Verformungsamplitude von 0 % bei 12 % Verformung in Kompression mit 10 Hz dynamischer Verformungsfrequenz bei konstanter Temperatur
- dynamischer Speichermodul E' bei 25 °C gemäß DIN 53 513 aus Messung mit variabler Verformungsamplitude von 0 % bei 12 % Verformung in Kompression mit 10 Hz dynamischer Verformungsfrequenz bei konstanter Temperatur
- Heat build-up (Wärmeaufbau) bestimmt mit einem zylindrischen Prüfkörper (r = 0,5 cm, h = 1 cm), der an ein Thermoelement angeschlossen ist und dessen Temperatur bei unterschiedlichen Kraft(Druck)einwirkungen mit einer Verformungsfrequenz von 30 Hz (dynamische Belastung unter Kompression) gemessen wird, Starttemperatur: Raumtemperatur
- Ermüdungsrissbeständigkeit als Anzahl der Lastwechsel bis zum Bruch einer hantelförmigen Probe unter einem sich ständig wiederholenden Dehnungszyklus mit einer Frequenz von 104 ± 8 min⁻¹, bestimmt mit einem Monsanto Fatique to Failure Tester bei 136 % Dehnung
- Stahlcordhaftung gemäß ASTM 2229/D1871, Einbettlänge 12,5 mm, Auszugsgeschwindigkeit 125mm/min, Messung der Kraft und der Bedeckung mit Gummi (0 = keine Bedeckung, 5 = 100 % Bedeckung)

**Tabelle 1**

| **Bestandteile** | **Einheit** | **1(V)** | **2(V)** | **3(E)** | **4(E)** | **5(E)** | **6(E)** |
|---|---|---|---|---|---|---|---|
| Naturkautschuk | phr | 80 | 90 | 80 | 80 | 80 | 80 |
| BR^{a} | phr | 20 | 10 | - | 10 | - | 10 |
| 1,2-BR in 1,4-BR I^{b} | phr | - | - | 20 | 10 | - | - |
| 1,2-BR in 1,4-BR II^{c} | phr | - | - | - | - | 20 | 10 |
| Kieselsäure | phr | 59 | 59 | 59 | 59 | 59 | 59 |
| Ruß | phr | 4 | 4 | 4 | 4 | 4 | 4 |
| Silan-Kupplungsagens | phr | 4 | 4 | 4 | 4 | 4 | |
| Verarbeitungshilfsmittel | phr | 8,5 | 8,5 | 8,5 | 8,5 | 8,5 | 8,5 |
| Alterungsschutzmittel | phr | 3 | 3 | 3 | 3 | 3 | |
| Zinkoxid | phr | 8 | 8 | 8 | 8 | 8 | 8 |
| Harz aus Resorcin und | phr | 5 | 5 | 5 | 5 | 5 | 5 |
| Formaldehydspender | | | | | | | |
| org. Cobaltsalz | phr | 1 | 1 | 1 | 1 | 1 | 1 |
| Beschleuniger | phr | 1,6 | 1,6 | 1,6 | 1,6 | 1,6 | 1,6 |
| Schwefel | phr | 4 | 4 | 4 | 4 | 4 | 4 |

| | | | | | | | |
|---|---|---|---|---|---|---|---|
| ^{a} cis-1,4-Polybutadien | | | | | | | |
| ^{b} Mikrodispersion von syndiotaktischem 1,2-Polybutadien in cis-1,4-Polybutadien, 12 Gew.-% 1,2-Polybutadien, VCR 412, Ube Industries LTD, Japan | | | | | | | |
| ^{c} Mikrodispersion von syndiotaktischem 1,2-Polybutadien in cis- 1,4-Polybutadien, 17 Gew.-% 1,2-Polybutadien, VCR 617, Ube Industries LTD, Japan | | | | | | | |

**Tabelle 2**

| **Bestandteile** | **Einheit** | **7(V)** | **8(V)** | **9(E)** | **10(E)** | **11(E)** | **12(E)** |
|---|---|---|---|---|---|---|---|
| Naturkautschuk | phr | 80 | 100 | 80 | 80 | 80 | 70 |
| BR^{a} | phr | 20 | - | - | - | 10 | - |
| 1,2-BR in 1,4-BR I^{b} | phr | - | - | 20 | - | - | - |
| 1,2-BR in 1,4-BR II^{c} | phr | - | - | - | 20 | 10 | 30 |
| Kieselsäure | phr | 65 | 65 | 65 | 65 | 65 | 65 |
| Ruß | phr | 4,5 | 4,5 | 4,5 | 4,5 | 4,5 | 4,5 |
| Silan-Kupplungsagens | phr | 4,5 | 4,5 | 4,5 | 4,5 | 4,5 | 4,5 |
| Verarbeitungshilfsmittel | phr | 2 | 2 | 2 | 2 | 2 | 2 |
| Alterungsschutzmittel | phr | 3 | 3 | 3 | 3 | 3 | 3 |
| Zinkoxid | phr | 8 | 8 | 8 | 8 | 8 | 8 |
| Harz aus Resorcin und | phr | 5 | 5 | 5 | 5 | 5 | 5 |
| Formaldehydspender | | | | | | | |
| org. Cobaltsalz | phr | 1 | 1 | 1 | 1 | 1 | 1 |
| Beschleuniger | phr | 1,6 | 1,6 | 1,6 | 1,6 | 1,6 | 1,6 |
| Schwefel | phr | 4 | 4 | 4 | 4 | 4 | 4 |

**Tabelle 3**

| **Eigenschaften** | **Einheit** | **1(V)** | **2(V)** | **3(E)** | **4(E)** | **5(E)** | **6(E)** |
|---|---|---|---|---|---|---|---|
| Zugfestigkeit bei RT | MPa | 23,7 | 22,1 | 21,3 | 21,9 | 22,0 | 22,2 |
| Reißdehnung bei RT | % | 532 | 508 | 470 | 498 | 478 | 510 |
| Spannungswert 100 % | MPa | 3,53 | 3,48 | 4,04 | 3,74 | 4,37 | 3,71 |
| Spannungswert 200 % | MPa | 7,57 | 7,49 | 8,53 | 7,92 | 9,04 | 7,90 |
| Spannungswert 300 % | MPa | 12,87 | 12,72 | 13,99 | 13,18 | 14,51 | 13,13 |
| Bruchenergiedichte | J/cm³ | 52,6 | 47,1 | 43,7 | 46,8 | 46,9 | 48,9 |
| Shore-A-Härte bei RT | Shore A | 79,4 | 79,9 | 81,6 | 81,3 | 83,0 | 82,8 |
| Rückprallelastizität bei RT | % | 39,3 | 39,9 | 40,1 | 39,7 | 38,7 | 39,4 |

| **nach 5 d bei 80 °C** | | | | | | | |
|---|---|---|---|---|---|---|---|
| Zugfestigkeit bei RT | MPa | 21,6 | 20,0 | 20,4 | 21,7 | 21,7 | 22,2 |
| Reißdehnung bei RT | % | 352 | 319 | 318 | 352 | 331 | 365 |
| Spannungswert 100 % | MPa | 6,29 | 6,38 | 6,89 | 6,54 | 7,43 | 6,49 |
| Spannungswert 200 % | MPa | 13,14 | 13,44 | 14,03 | 13,48 | 14,72 | 13,36 |
| Spannungswert 300 % | MPa | 20,15 | 20,51 | - | 20,33 | 21,46 | 20,17 |
| Bruchenergiedichte | J/cm³ | 35,5 | 29,8 | 30,6 | 36,1 | 34,8 | 38,5 |
| Shore-A-Härte bei RT | Shore A | 86,9 | 86,4 | 88,5 | 87,5 | 89,3 | 87,5 |
| Rückprallelastizität bei RT | % | 41,9 | 43,7 | 43,5 | 43,4 | 42,2 | 44,1 |

| **Differenz gealtert - nicht** | **gealtert** | | | | | | |
|---|---|---|---|---|---|---|---|
| Zugfestigkeit bei RT | % | -8,9 | -9,5 | -4,2 | -0,9 | -1,4 | 0,0 |
| Reißdehnung bei RT | % | -33,8 | -37,2 | -32,3 | -29,3 | -30,8 | -28,4 |
| Spannungswert 100 % | % | 78,2 | 83,3 | 70,5 | 74,9 | 70,0 | 74,9 |
| Spannungswert 200 % | % | 73,6 | 79,4 | 64,5 | 70,2 | 62,8 | 69,1 |
| Spannungswert 300 % | % | 56,6 | 61,2 | - | 54,2 | 47,9 | 53,6 |
| Bruchenergiedichte | % | -32,5 | -36,7 | -30,0 | -22,9 | -25,8 | -21,3 |
| Shore-A-Härte bei RT | % | 9,4 | 8,1 | 8,5 | 7,6 | 7,6 | 5,7 |
| Rückprallelastizität bei RT | % | 6,6 | 9,5 | 8,5 | 9,3 | 9,0 | 11,9 |

**Tabelle 4**

| **Eigenschaften** | **Einheit** | **1(V)** | **2(V)** | **3(E)** | **4(E)** | **5(E)** | **6(E)** |
|---|---|---|---|---|---|---|---|
| E' bei 0,2 % Dehnung | MPa | 18,02 | 18,90 | 22,19 | 20,43 | 24,53 | 21,07 |
| E' bei 3,2 % Dehnung | MPa | 10,36 | 10,83 | 11,88 | 11,40 | 12,84 | 11,70 |
| E' bei 10 % Dehnung | MPa | 8,20 | 8,57 | 9,18 | 8,86 | 9,75 | 9,09 |
| tan δ bei 0,2 % Dehnung | - | 0,110 | 0,113 | 0,115 | 0,118 | 0,117 | 0,115 |
| tan δ bei 3,2 % Dehnung | - | 0,189 | 0,189 | 0,202 | 0,186 | 0,217 | 0,200 |
| tan δ bei 10 % Dehnung | - | 0,174 | 0,166 | 0,183 | 0,169 | 0,200 | 0,190 |
| Stahlcordhaftung | N | 944 | 908 | 969 | 947 | 972 | 967 |
| (Herausziehkraft) | | | | | | | |
| Stahlcordhaftung | | 4 | 4 | 4,1 | 4,1 | 4 | 4,25 |
| (Bedeckung) | | | | | | | |
| Heat build-up bei | | | | | | | |
| 0,10 MPa Belastung | °C | 24,2 | 23,5 | 23,3 | 23,7 | 23,9 | 23,3 |
| 0,15 MPa Belastung | °C | 24,4 | 23,9 | 23,6 | 24,5 | 24,2 | 23,7 |
| 0,25 MPa Belastung | °C | 27,9 | 26,7 | 26,8 | 31,3 | 26,0 | 26,7 |
| 0,35 MPa Belastung | °C | 33,8 | 29,0 | 32,3 | 36,8 | 30,5 | 29,4 |
| 0,42 MPa Belastung | °C | 38,5 | 36,6 | 37,8 | 39,5 | 33,3 | 34,1 |
| 0,50 MPa Belastung | °C | 43,5 | 43,2 | 46,2 | 57,9 | 36,8 | 39,9 |
| Ermüdungsrissbeständigkeit | ×1000 | 10,65 | 15,00 | 48,75 | 74,6 | 32,65 | 62,9 |
| bei 136 % Dehnung (Mittelwert) | Zyklen | | | | | | |

| **nach 5 d bei 80 °C** | | | | | | | |
|---|---|---|---|---|---|---|---|
| Heat build-up bei | | | | | | | |
| 0,10 MPa Belastung | °C | 23,5 | 23,5 | 23,1 | 23,2 | 23,7 | 23,5 |
| 0,15 MPa Belastung | °C | 23,8 | 23,7 | 23,4 | 23,4 | 24,1 | 23,7 |
| 0,25 MPa Belastung | °C | 26,2 | 26,5 | 25,7 | 26,9 | 26,6 | 25,7 |
| 0,35 MPa Belastung | °C | 29,8 | 31,4 | 29,5 | 30,0 | 28,5 | 27,6 |
| 0,42 MPa Belastung | °C | 31,8 | 34,8 | 31,2 | 32,7 | 32,6 | 31,0 |
| 0,50 MPa Belastung | °C | 37,6 | 42,3 | 36,7 | 41,2 | 36,6 | 35,2 |
| Ermüdungsrissbeständigkeit | ×1000 | 11,6 | 8,6 | 14,9 | 10,6 | 14,0 | 11,9 |
| bei 136 % Dehnung (Mittelwert) | Zyklen | | | | | | |

**Tabelle 5**

| **Eigenschaften** | **Einheit** | **7(V)** | **8(V)** | **9(E)** | **10(E)** | **11(E)** | **12(E)** |
|---|---|---|---|---|---|---|---|
| Mooney-Viskosität | ME | 129 | 120 | 132 | 136 | 125 | 132 |
| ML 1+3 bei 100 °C | | | | | | | |
| Zugfestigkeit bei RT | MPa | 22,9 | 22,5 | 22,2 | 21,5 | 22,4 | 18,5 |
| Reißdehnung bei RT | % | 411 | 411 | 378 | 360 | 399 | 295 |
| Spannungswert 100 % | MPa | 5,2 | 4,61 | 5,85 | 6,17 | 5,57 | 7,0 |
| Spannungswert 200 % | MPa | 11,34 | 10,58 | 12,38 | 12,79 | 11,72 | 13,73 |
| Spannungswert 300 % | MPa | 18,04 | 17,47 | 19,24 | 19,62 | 18,32 | - |
| Bruchenergiedichte | J/cm³ | 42,5 | 40,1 | 38,6 | 36,1 | 41,0 | 26,1 |
| Shore-A-Härte bei RT | Shore A | 83,1 | 82,9 | 85,0 | 85,8 | 85,2 | 87,5 |
| Rückprallelastizität bei RT | % | 40,7 | 39,1 | 40,5 | 38,7 | 40,3 | 39,7 |

| **nach 5 d bei 80 °C** | | | | | | | |
|---|---|---|---|---|---|---|---|
| Zugfestigkeit bei RT | MPa | 18,1 | 22,6 | 18,8 | 19,9 | 18,0 | 17,7 |
| Reißdehnung bei RT | % | 252 | 326 | 250 | 253 | 247 | 214 |
| Spannungswert 100 % | MPa | 7,63 | 6,99 | 8,36 | 8,89 | 8,12 | 9,7 |
| Spannungswert 200 % | MPa | 15,64 | 15,09 | 16,76 | 17,35 | 15,98 | 17,97 |
| Spannungswert 300 % | MPa | - | 22,65 | - | - | - | - |
| Bruchenergiedichte | J/cm³ | 21,4 | 34,0 | 23,2 | 24,7 | 22,0 | 19,2 |
| Shore-A-Härte bei RT | Shore A | 88,7 | 87,7 | 89,7 | 90,1 | 90,1 | 92,4 |
| Rückprallelastizität bei RT | % | 43,1 | 42,3 | 44,3 | 41,8 | 43,0 | 42,0 |

| **Differenz gealtert - nicht** | **Gealtert** | | | | | | |
|---|---|---|---|---|---|---|---|
| Zugfestigkeit bei RT | % | -21,0 | 0,4 | -15,3 | -7,4 | -19,6 | -4,3 |
| Reißdehnung bei RT | % | -38,7 | -20,7 | -33,9 | -29,7 | -38,1 | -27,5 |
| Spannungswert 100 % | % | 46,7 | 51,6 | 42,9 | 44,1 | 45,8 | 38,6 |
| Spannungswert 200 % | % | 37,9 | 42,6 | 35,4 | 35,7 | 36,4 | 30,9 |
| Spannungswert 300 % | % | - | 29,7 | - | - | - | - |
| Bruchenergiedichte | % | -49,7 | -15,2 | -39,9 | -31,6 | -46,3 | -26,4 |
| Shore-A-Härte bei RT | % | 6,7 | 5,8 | 5,5 | 5,0 | 5,8 | 5,6 |
| Rückprallelastizität bei RT | % | 5,9 | 8,2 | 9,4 | 8,0 | 6,7 | 5,8 |

**Tabelle 6**

| **Eigenschaften** | **Einheit** | **7(V)** | **8(V)** | **9(E)** | **10(E)** | **11(E)** | **12(E)** |
|---|---|---|---|---|---|---|---|
| E' bei 0,094 % Dehnung | MPa | 23,07 | 19,62 | 25,80 | 26,83 | 26,07 | 31,95 |
| E' bei 3,2 % Dehnung | MPa | 12,24 | 10,76 | 13,97 | 13,77 | 13,15 | 16,09 |
| E' bei 10 % Dehnung | MPa | 9,84 | 8,54 | 11,23 | 10,80 | 10,21 | 12,36 |
| tan δ bei 0,094 % Dehnung | - | 0,111 | 0,111 | 0,106 | 0,104 | 0,107 | 0,112 |
| tan δ bei 3,2 % Dehnung | - | 0,188 | 0,192 | 0,189 | 0,192 | 0,201 | 0,206 |
| tan δ bei 10 % Dehnung | - | 0,171 | 0,173 | 0,167 | 0,172 | 0,183 | 0,182 |

Aus den Tabellen 3 und 5, oberer Teil wird ersichtlich, dass die erfindungsgemäßen Mischungen 3 bis 6 und 9 bis 12 im Vergleich zu den anderen Mischungen einen höheren Spannungswert bei Dehnung aufweisen. Die Rückprallelastizität verbleibt dabei auf vergleichbarem Niveau. Die erfindungsgemäßen Mischungen zeichnen sich auch durch eine höhere Shore-A-Härte aus.

Vergleicht man die Daten aus dem Zugversuch und zur Shore-A-Härte vor und nach der Alterung über 5 Tage bei 80 °C, so kann man insbesondere bei den Mischungen 3 bis 6 ein deutlich verbessertes Alterungsverhalten im Hinblick auf die Zugfestigkeit und die Reißdehnung erkennen. Auch die anderen Vulkanisateigenschaften zeigen bei allen erfindungsgemäßen Mischungen (3 bis 6 und 9 bis 12) ein gutes oder verbessertes Alterungsverhalten, die Differenz zwischen den gemessenen Größen vor und nach der Alterung ist oftmals kleiner als bei den Vergleichsmischungen.

Die Daten zum dynamischen Speichermodul und zum Verlustfaktor der Tabellen 4 und 6 belegen, dass der dynamische Speichermodul der erfindungsgemäßen Mischungen deutlich über denen der Vergleichsmischungen liegt, wobei gleichzeitig der Verlustfaktor auf ähnlichem Niveau verbleibt.

Auch die Wärmeentwicklung (Heat Build-up) der Mischungen und die Haftung zum Stahlcord vor und nach der Alterung bewegen sich für die Vergleichsmischungen und die erfindungsgemäßen Mischungen im gleichen Rahmen (s. Tabelle 4).

Die Ermüdungrissbeständigkeit der erfindungsgemäßen Mischungen liegt insbesondere vor der Alterung auf einem deutlich höheren Niveau als bei den Vergleichsmischungen.

Es ist anzumerken, dass sich bei den erfindungsgemäßen Mischungen 9 bis 12 die Viskositäten trotz höherer Härte und zunehmendem Spannungswert bei Dehnung auf dem gleichem Niveau bewegen wie bei den Vergleichsmischungen(7, 8). Man kann daher die Menge an Verarbeitungshilfsmitteln in Mischungen gemäß Anspruch 1 reduzieren und erhält trotzdem Mischungen mit guter Härte und gutem Spannungswert bei Dehnung.

Zusammenfassend lässt sich feststellen, dass Mischungen gemäß dem Anspruch 1 hervorragende Eigenschaften aufweisen, die sie insbesondere für den Einsatz als Festigkeitsträgergummierung und/oder Gürtelkantenstreifen in Fahrzeugluftreifen tauglich macht, so dass sich z. B. Reifen mit hoher Gürtelhaltbarkeit herstellen lassen.

## Patentansprüche

1. Schwefelvernetzbare Kautschukmischung, insbesondere für Festigkeitsträgergummierungen und/oder Gürtelkantenstreifen von Fahrzeugluftreifen, enthaltend
- 50 bis 95 phr (Gewichtsteile, bezogen auf 100 Gewichtsteile der gesamten Kautschuke in der Mischung) Naturkautschuk,
- 5 bis 50 phr einer Mikrodispersion von syndiotaktischem 1,2-Polybutadien in cis-1,4-Polybutadien, wobei die Mikrodispersion 5 bis 40 Gew.-% des syndiotaktischem 1,2-Polybutadiens aufweist,
- 0 bis 35 phr zumindest eines weiteren Dienkautschukes außer Naturkautschuk und
- 45 bis 100 phr Kieselsäure und/oder Ruß.

2. Kautschukmischung nach Anspruch 1, **dadurch gekennzeichnet, dass** sie 65 bis 90 phr Naturkautschuk enthält.

3. Kautschukmischung nach Anspruch 1 oder 2, **dadurch gekennzeichnet, dass** sie 10 bis 35 phr der Mikrodispersion von syndiotaktischem 1,2-Polybutadien in cis-1,4-Polybutadien enthält.

4. Kautschukmischung nach zumindest einem der vorhergehenden Ansprüche, **dadurch gekennzeichnet, dass** die Mikrodispersion 10 bis 20 Gew.-% des syndiotaktischen 1,2-Polybutadiens aufweist.

5. Kautschukmischung nach zumindest einem der vorhergehenden Ansprüche, **dadurch gekennzeichnet, dass** sie 5 bis 25 phr cis-1,4-Polybutadien als weiteren Dienkautschuk enthält.

6. Kautschukmischung nach zumindest einem der vorhergehenden Ansprüche, **dadurch gekennzeichnet, dass** sie 0,2 bis 2 phr eines organischen Cobaltsalzes enthält.

7. Kautschukmischung nach Anspruch 6, **dadurch gekennzeichnet, dass** sie 3,5 bis 6 phr Schwefel enthält.

8. Fahrzeugluftreifen, der eine mit Schwefel vernetzte Kautschukmischung nach zumindest einem Ansprüche 1 bis 7 aufweist.

9. Fahrzeugluftreifen nach Anspruch 8, **dadurch gekennzeichnet, dass** er eine Gürtelgummierung und/oder Gürtelkantenstreifen aus der Kautschukmischung aufweist.

10. Fahrzeugluftreifen nach Anspruch 8 oder 9, **dadurch gekennzeichnet, dass** er eine Wulstverstärkergummierung aus der Kautschukmischung aufweist.

11. Fahrzeugluftreifen nach Anspruch 8, 9 oder 10, **dadurch gekennzeichnet, dass** er eine Karkassgummierung aus der Kautschukmischung aufweist.

## Geänderte Patentansprüche

### Geänderte Patentansprüche gemäss Regel 86(2) EPÜ.

**1.** Fahrzeugluftreifen, der zumindest eine Festigkeitsträgergummierungen und/oder Gürtelkantenstreifen aus einer mit Schwefel vernetzten Kautschukmischung aufweist, wobei die Kautschukmischung
- 50 bis 95 phr (Gewichtsteile, bezogen auf 100 Gewichtsteile der gesamten Kautschuke in der Mischung) Naturkautschuk,
- 45 bis 100 phr Kieselsäure und/oder Ruß,
- 0,2 bis 2 phr eines organischen Cobaltsalzes,
- 3,5 bis 6 phr Schwefel enthält,
**dadurch gekennzeichnet, dass**
die Kautschukmischung 5 bis 50 phr einer Mikrodispersion von syndiotaktischem 1,2-Polybutadien in cis-1,4-Polybutadien enthält, wobei die Mikrodispersion 5 bis 40 Gew.-% des syndiotaktischen 1,2-Polybutadiens aufweist.

**2.** Fahrzeugluftreifen nach Anspruch 1, **dadurch gekennzeichnet, dass** sie 65 bis 90 phr Naturkautschuk enthält.

**3.** Fahrzeugluftreifen nach Anspruch 1 oder 2, **dadurch gekennzeichnet, dass** sie 10 bis 35 phr der Mikrodispersion von syndiotaktischem 1,2-Polybutadien in cis-1,4-Polybutadien enthält.

**4.** Fahrzeugluftreifen nach zumindest einem der vorhergehenden Ansprüche, **dadurch gekennzeichnet, dass** die Mikrodispersion 10 bis 20 Gew.-% des syndiotaktischen 1,2-Polybutadiens aufweist.

**5.** Fahrzeugluftreifen nach zumindest einem der vorhergehenden Ansprüche, **dadurch gekennzeichnet, dass** sie bis zu 35 phr eines weiteren Dienkautschukes außer Naturkautschuk und der Mikrodispersion enthält.

**6.** Fahrzeugluftreifen nach Anspruch 5, **dadurch gekennzeichnet, dass** sie 5 bis 25 phr cis-1,4-Polybutadien als weiteren Dienkautschuk enthält.
